# EUROPEAN PATENT APPLICATION

(11) **EP 3 913 773 A1**
(43) Date of publication of application: **24.11.2021**
(21) Application number: 20741164.6
(22) Date of filing: 14.01.2020
(51) Int. Cl.: H02K 3/12, H02K 3/04, H02K 3/28

(54) **MOTOR WINDING AND MOTOR STATOR**

(30) Priority: 17.01.2019 CN 201910044895
(71) Applicant: Tianjin Santroll Electric Automobile Technology Co., Ltd., Tianjin 300308 (CN)
(72) Inventor: LIU, Yanhai, Tianjin 300308 (CN); BO, Rongjian, Tianjin 300308 (CN); ZHENG, Yanshuang, Tianjin 300308 (CN)
(74) Representative: Chimini, Francesco
(86) International application number: PCT/CN2020/072014
(87) International publication number: WO 2020/147719

(57) **Abstract**

Disclosed in the embodiments of the invention are an electric motor winding and an electric motor stator. The electric motor winding includes: at least one first segmented coil group, wherein each first segmented coil group includes N first segmented coil units, any one of the first segmented coil units including M first hairpin coils with different slot pitches; any one of the first hairpin coils includes: a first slot outer end portion, a first slot inner portion, a first slot outer bending portion, a second slot inner portion and a second slot outer end portion which are connected sequentially, the first slot outer end portion and the second slot outer end portion extending oppositely in a circumferential direction; the M first hairpin coils are arranged concentrically; and the N first segmented coil units of the each first segmented coil group are arranged sequentially in the circumferential direction, and the parts in the N * M slots are distributed in two layers in a radial direction. The technical solution of the embodiments of the invention reduces the complexity of a manufacturing process, reduces the production cost, and improves the machining efficiency.

## Description

### Cross-Reference to Related Application

The invention claims the priority of Chinese Patent Application No. 201910044895.1, filed to the Chinese Patent Office on January 17, 2019 and entitled "Electric Motor Winding and Electric Motor Stator".

### Technical Field

The invention relates to the technical field of electric motors, in particular to an electric motor winding and an electric motor stator.

### Background

A stator winding of a hairpin electric motor has a shape like a hairpin. In a manufacturing process of a stator, the winding is made into a shape like a hairpin and then penetrates into a slot of a stator core, and the end of the hairpin is welded on the other section according to the design.

The stator winding includes a plurality of hairpin coils, and the plurality of hairpin coils penetrate into slots of the stator core in a certain arrangement mode, so as to form a required winding of a single-phase electric motor or a multi-phase electric motor. The hairpin coils used in the art are various in types and complex in arrangement mode, a large number of bus bars and collecting bars need to be used for connecting branches and neutral points of windings of all phases, the manufacturing process is complex, the production cost is high, and the machining efficiency is low.

### Summary

The embodiments of the invention provide an electric motor winding and an electric motor stator, which may reduce the complexity of a manufacturing process, reduce the production cost, and improve the machining efficiency.

In the first aspect, provided in the embodiments of the invention is an electric motor winding, including:
at least one first segmented coil group;
wherein each first segmented coil group includes N first segmented coil units, any one of the first segmented coil units including M first hairpin coils with different slot pitches, wherein N ≥ 6, M ≥ 2, N is a multiple of 3, and N and M are integers;
any one of the first hairpin coils includes: a first slot outer end portion, a first slot inner portion, a first slot outer bending portion, a second slot inner portion and a second slot outer end portion which are connected sequentially, the first slot inner portion and the second slot inner portion being located in different slots, the first slot outer end portion and the second slot outer end portion extending oppositely in a circumferential direction, and the M first hairpin coils are arranged concentrically;
the N first segmented coil units of each first segmented coil group are arranged sequentially in the circumferential direction, and the parts in the N * M slots are distributed in two layers in a radial direction;
first slot inner portions of the M first hairpin coils of any one of the first segmented coil units are located in M adjacent slots of a first layer, and second slot inner portions of the M first hairpin coils of any one of the first segmented coil units are located in M adjacent slots of a second layer;
first slot inner portions of M first hairpin coils of the nth first segmented coil unit and first slot inner portions of M first hairpin coils of the (n + 1)-th first segmented coil unit are located in 2M adjacent slots of the first layer, and second slot inner portions of the M first hairpin coils of the n-th first segmented coil unit and second slot inner portions of the M first hairpin coils of the (n + 1)-th first segmented coil unit are located in 2M adjacent slots of the second layer, wherein n = 1, 2... N - 1, and n is an integer;
first slot inner portions of M first hairpin coils of an Nth first segmented coil unit and first slot inner portions of M first hairpin coils of first first segmented coil unit are located in 2M adjacent slots of the first layer, and second slot inner portions of the M first hairpin coils of the Nth first segmented coil unit and second slot inner portions of the M first hairpin coils of the first first segmented coil unit are located in 2M adjacent slots of the second layer; and
first slot outer bending portions of all the first hairpin coils in the at least one first segmented coil group are located on one side of an electric motor, and first slot outer end portions and second slot outer end portions of all the first hairpin coils in the at least one first segmented coil group are located on the other side of the electric motor.

In an embodiment, the electric motor winding includes at least two first segmented coil groups arranged in a surrounding manner in the radial direction.

In an embodiment, the electric motor winding further includes a second segmented coil group, wherein the second segmented coil group and the at least one first segmented coil group are arranged in a surrounding manner in the radial direction, the second segmented coil group is located at an outermost or innermost side,
and the second segmented coil group includes N/2 second segmented coil units, any one of the second segmented coil units including M second hairpin coils;
any one of the second hairpin coils includes: a third slot outer end portion, a third slot inner portion, a second slot outer bending portion, a fourth slot inner portion and a fourth slot outer end portion which are connected sequentially, the third slot inner portion and the fourth slot inner portion being located in different slots; the M second hairpin coils are arranged concentrically;
the N/2 second segmented coil units of the second segmented coil group are sequentially arranged in the circumferential direction, and parts in the N * M slots are distributed in one layer in the radial direction;
third slot inner portions of the M second hairpin coils of the any one of the second segmented coil units are located in M adjacent slots, and fourth slot inner portions of the M second hairpin coils of the any one of the second segmented coil units are located in M adjacent slots;
fourth slot inner portions of M second hairpin coils of a k-th second segmented coil unit and third slot inner portions of M second hairpin coils of a (k + 1)-th second segmented coil unit are located in 2M adjacent slots, wherein k = 1, 2... (N/2) - 1, and k is an integer;
fourth slot inner portions of M second hairpin coils of the N/2-th second segmented coil unit and third slot inner portions of M second hairpin coils of the first second segmented coil unit are located in 2M adjacent slots;
in the second segmented coil group and the at least one first segmented coil group, first slot outer bending portions of all the first hairpin coils and second slot outer bending portions of all the second hairpin coils are located on one side of the electric motor, and first slot outer end portions and second slot outer end portions of all the first hairpin coils and third slot outer end portions and fourth slot outer end portions of all the second hairpin coils are located on the other side of the electric motor;
the N/2 second segmented coil units have K third segmented coil units and X fourth segmented coil units, and a phase number of the electric motor winding equals X, wherein K and X are integers, K ≥ 1, (N/2) - K ≥ 1, and X = (N/2) - K;
a third slot outer end portion and a fourth slot outer end portion of a second hairpin coil of any one of the third segmented coil units extend oppositely in the circumferential direction; the third slot outer end portion and the fourth slot outer end portion of the second hairpin coil of any one of the fourth segmented coil units extend in the same direction in the circumferential direction; and
the first to the (N/2 - X)-th second segmented coil units are the third segmented coil units, and the (N/2 - X + 1)-th to the N/2-th second segmented coil units are the fourth segmented coil units.

In an embodiment, distance spans, in the circumferential direction, of the first slot outer end portion and the second slot outer end portion of each first hairpin coil are both half of a pitch.

In an embodiment, distance spans, in the circumferential direction, of the third slot outer end portion and the fourth slot outer end portion of the second hairpin coil each is half of the pitch.

In an embodiment, M equals 2, and slot pitches of the first slot inner portions and the second slot inner portions of the two first hairpin coils of the each first segmented coil unit are a long pitch and a short pitch respectively.

In an embodiment, the first slot outer end portion, the second slot outer end portion, the third slot outer end portion, and the fourth slot outer end portion all have extension ends, and extension ends, away from the second segmented coil group, of 2X first segmented coil units of the first segmented coil group serve as connection ends, and
in any one of the first segmented coil groups, except for an extension end in the same radial direction as the extension end serving as the connection end, two extension ends, in the same radial direction, in the remaining extension ends are connected;
in any one of the second segmented coil groups, except for an extension end in the same radial direction as the extension end serving as the connection end, two extension ends, in the same radial direction, in the remaining extension ends are connected; and
in the extension ends which are located in the same radial direction as the extension ends serving as the connection ends, except for the extension ends serving as the connection ends, every two adjacent extension ends in the remaining extension ends are connected.

In an embodiment, M equals the number of slots per pole per phase of the electric motor, and M is an even number.

In the second aspect, further provided in the embodiments of the invention is an electric motor winding, including:
a third segmented coil group, including N fifth segmented coil units, wherein any one of the fifth segmented coil units includes M third hairpin coils with different slot pitches,
any one of the third hairpin coils including: a fifth slot outer end portion, a fifth slot inner portion, a third slot outer bending portion, a sixth slot inner portion and a sixth slot outer end portion which are connected sequentially, wherein the fifth slot inner portion and the sixth slot inner portion are located in different slots; the M third hairpin coils are arranged concentrically;
the N fifth segmented coil units of the third segmented coil group are arranged sequentially in the circumferential direction, the parts in the N * M slots are distributed in two layers in the radial direction,
the fifth slot inner portions of the M third hairpin coils of any one of the fifth segmented coil units are located in M adjacent slots of a first layer of the third segmented coil group, and the sixth slot inner portions of the M third hairpin coils of any one of the fifth segmented coil units are located in M adjacent slots of a second layer of the third segmented coil group;
the fifth slot inner portions of the M third hairpin coils of the p-th fifth segmented coil unit and the fifth slot inner portions of the M third hairpin coils of the (p + 1)-th fifth segmented coil unit are located in 2M adjacent slots of the first layer of the third segmented coil group, and the sixth slot inner portions of the M third hairpin coils of the p-th fifth segmented coil unit and the sixth slot inner portions of the M third hairpin coils of the (p + 1)-th fifth segmented coil unit are located in 2M adjacent slots of the second layer of the third segmented coil group, wherein p = 1, 2... N - 1, and p is an integer;
fifth slot inner portions of the M third hairpin coils of the Nth fifth segmented coil unit and the fifth slot inner portions of the M third hairpin coils of the first fifth segmented coil unit are located in adjacent 2 M slots of the first layer of the third segmented coil group, and the sixth slot inner portions of the M third hairpin coils of the Nth fifth segmented coil unit and the sixth slot inner portions of the M third hairpin coils of the first fifth segmented coil unit are located in 2M adjacent slots of the second layer;
third slot outer bending portions of all the third hairpin coils of the third segmented coil group are located on one side of an electric motor, and the fifth slot outer end portions and the sixth slot outer end portions of all the third hairpin coils of the third segmented coil group are located on the other side of the electric motor;
N fifth segmented coil units have P sixth segmented coil units and X seventh segmented coil units, wherein N ≥ 6, M ≥ 2, N, M, X and P are integers, N - P ≥ 1, a phase number of the electric motor winding equals X, and X = N - P;
a fifth slot outer end portion and a sixth slot outer end portion of a third hairpin coil of any one of the sixth segmented coil units extend oppositely in the circumferential direction;
a fifth slot outer end portion and a sixth slot outer end portion of a third hairpin coil of any one of the seventh segmented coil units extend in the same direction in the circumferential direction;
the P sixth segmented coil units are used for forming an X-phase winding, and each phase of winding has 2M parallel branches; and
any one of the seventh segmented coil units is used for connecting the M parallel branches with the other M parallel branches in one phase of winding in series.

In an embodiment, the first to the (N - X)-th third segmented coil units are the fourth segmented coil units, and
the (N - X + 1)-th to the Nth third segmented coil units are the fifth segmented coil units.

In an embodiment, the electric motor winding further includes at least one first segmented coil group, wherein the third segmented coil group and the at least one first segmented coil group are arranged in a surrounding manner in the radial direction, the third segmented coil group is located at an outermost or innermost side,
wherein each first segmented coil group includes N first segmented coil units, any one of the first segmented coil units including M first hairpin coils with different slot pitches; any one of the first hairpin coils includes: a first slot outer end portion, a first slot inner portion, a first slot outer bending portion, a second slot inner portion and a second slot outer end portion which are connected sequentially, the first slot inner portion and the second slot inner portion being located in different slots, the first slot outer end portion and the second slot outer end portion extending oppositely in a circumferential direction; the M first hairpin coils are arranged concentrically;
the N first segmented coil units of each first segmented coil group are arranged sequentially in the circumferential direction, and the parts in the N * M slots are distributed in two layers in a radial direction;
the first slot inner portions of the M first hairpin coils of any one of the first segmented coil units are located in M adjacent slots of a first layer, and the second slot inner portions of the M first hairpin coils of any one of the first segmented coil units are located in M adjacent slots of a second layer;
the first slot inner portions of the M first hairpin coils of the q-th first segmented coil unit and the first slot inner portions of the M first hairpin coils of the (q + 1)-th first segmented coil unit are located in 2M adjacent slots of the first layer, and the second slot inner portions of the M first hairpin coils of the q-th first segmented coil unit and the second slot inner portions of the M first hairpin coils of the (q + 1)-th first segmented coil unit are located in 2M adjacent slots of the second layer, wherein q = 1, 2... N - 1, and q is an integer;
the first slot inner portions of the M first hairpin coils of the N-th first segmented coil unit and the first slot inner portions of the M first hairpin coils of the first first segmented coil unit are located in 2M adjacent slots of the first layer, and the second slot inner portions of the M first hairpin coils of the Nth first segmented coil unit and the second slot inner portions of the M first hairpin coils of the first first segmented coil unit are located in 2M adjacent slots of the second layer;
the third slot outer bending portions of all the third hairpin coils of the third segmented coil group and the first slot outer bending portions of all the first hairpin coils of the at least one first segmented coil group are located on one side of the electric motor; and the fifth slot outer end portions and the sixth slot outer end portions of all the third hairpin coils of the third segmented coil group and the first slot outer end portions and the second slot outer end portions of all the first hairpin coils of the at least one first segmented coil group are located on the other side of the electric motor.

In the third aspect, further provided in the embodiments of the invention is an electric motor stator, including: a stator core and the electric motor winding provided in any embodiment of the invention, wherein the stator core is provided with a plurality of slots arranged in a circumferential direction and extending in an axial direction, a first slot inner portion and a second slot inner portion of the first hairpin coil are located in the slots.

According to the technical solution in the embodiments of the invention, M first hairpin coils which are different in slot pitch and are arranged concentrically serve as a first segmented coil unit of the motor winding, the N first segmented coil units are arranged sequentially in the circumferential direction, parts in N * M slots are distributed in two layers in the radial direction, which forms a first segmented coil group, wherein the first slot outer end portion and the second slot outer end portion of the first hairpin coil extend oppositely in the circumferential direction, the first slot inner portions of the M first hairpin coils of any one of the first segmented coil units are located in the M adjacent slots of the first layer, the second slot inner portions of the M first hairpin coils of any one of the first segmented coil units are located in the M adjacent slots of the second layer, the first slot inner portions of the M first hairpin coils of any two adjacent first segmented coil units are located in the 2M adjacent grooves of the first layer, the second slot inner portions of the M first hairpin coils of any two adjacent first segmented coil units are located in the 2M adjacent grooves of the second layer, accordingly, types of the used coil units are less, an arrangement mode is simple, the complexity of a manufacturing process may be reduced, the production cost is reduced, and the machining efficiency is improved.

### Brief Description of the Drawings

Fig. 1 is a structural schematic diagram of an electric motor winding provided in the embodiment of the invention;
Fig. 2 is a structural schematic diagram of a first segmented coil unit provided in the embodiment of the invention;
Fig. 3 is a distribution connection schematic diagram of one phase of winding of the electric motor winding provided in the embodiment of the invention;
Fig. 4 is a structural schematic diagram of an electric motor stator provided in the embodiment of the invention;
Fig. 5 is a connection schematic diagram of the electric motor winding provided in the embodiment of the invention;
Fig. 6 is a connection schematic diagram of another electric motor winding provided in the embodiment of the invention;
Fig. 7 is a structural schematic diagram of another electric motor winding provided in the embodiment of the invention;
Fig. 8 is a distribution connection schematic diagram of one phase of winding of another electric motor winding provided in the embodiment of the invention;
Fig. 9 is a structural schematic diagram of a fourth segmented coil unit provided in the embodiment of the invention;
Fig. 10 is a structural schematic diagram of a second segmented coil group provided in the embodiment of the invention;
Fig. 11 is a structural schematic diagram of another electric motor winding provided in the embodiment of the invention;
Fig. 12 is a distribution connection schematic diagram of a one phase of winding of another electric motor winding provided in the embodiment of the invention;
Fig. 13 is a connection schematic diagram of another electric motor winding provided in the embodiment of the invention;
Fig. 14 is a structural schematic diagram of another second segmented coil group provided in the embodiment of the invention;
Fig. 15 is a structural schematic diagram of another fourth segmented coil unit provided in the embodiment of the invention;
Fig. 16 is a structural schematic diagram of another electric motor winding provided in the embodiment of the invention;
Fig. 17 is a distribution connection schematic diagram of a one phase of winding of another electric motor winding provided in the embodiment of the invention;
Fig. 18 is a structural schematic diagram of another electric motor winding provided in the embodiment of the invention;
Fig. 19 is a distribution connection schematic diagram of one phase of winding of another electric motor winding provided in the embodiment of the invention;
Fig. 20 is a structural schematic diagram of one phase of winding, corresponding to Fig.7, provided in the embodiment of the invention;
Fig. 21 is a structural schematic diagram of one phase of winding, corresponding to Fig.11, provided in the embodiment of the invention;
Fig. 22 is a structural schematic diagram of one phase of winding, corresponding to Fig.18, provided in the embodiment of the invention.

### Detailed Description of the Embodiments

The invention will be further elaborated hereafter in conjunction with the accompanying drawings and embodiments. It is to be understood that the specific embodiments described herein are for purposes of explanation only and not limitation of the invention. It should also be noted that for ease of description, only some, but not all, of the structures associated with the invention are shown in the accompanying drawings.

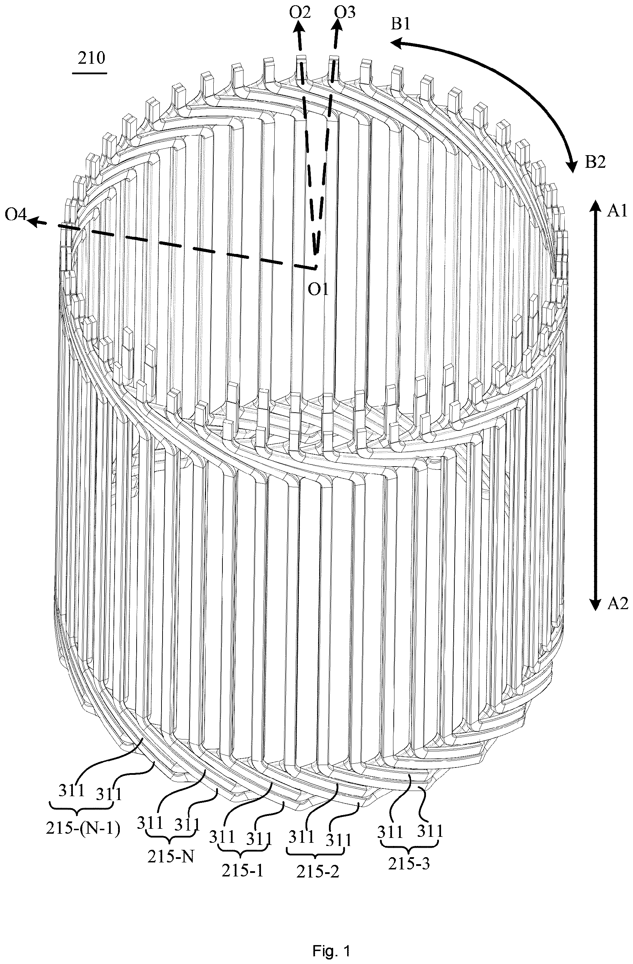

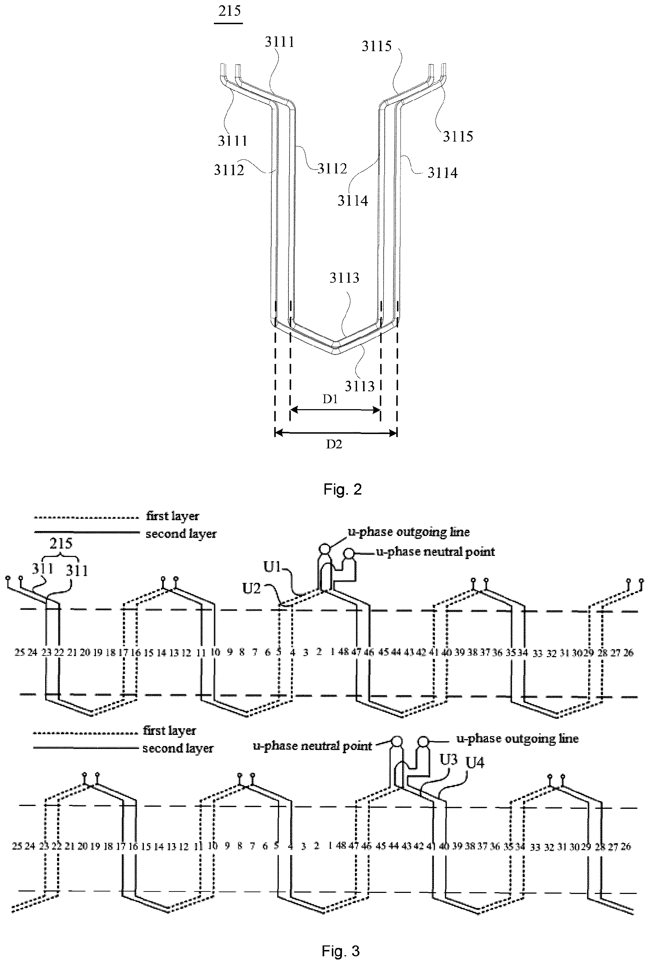

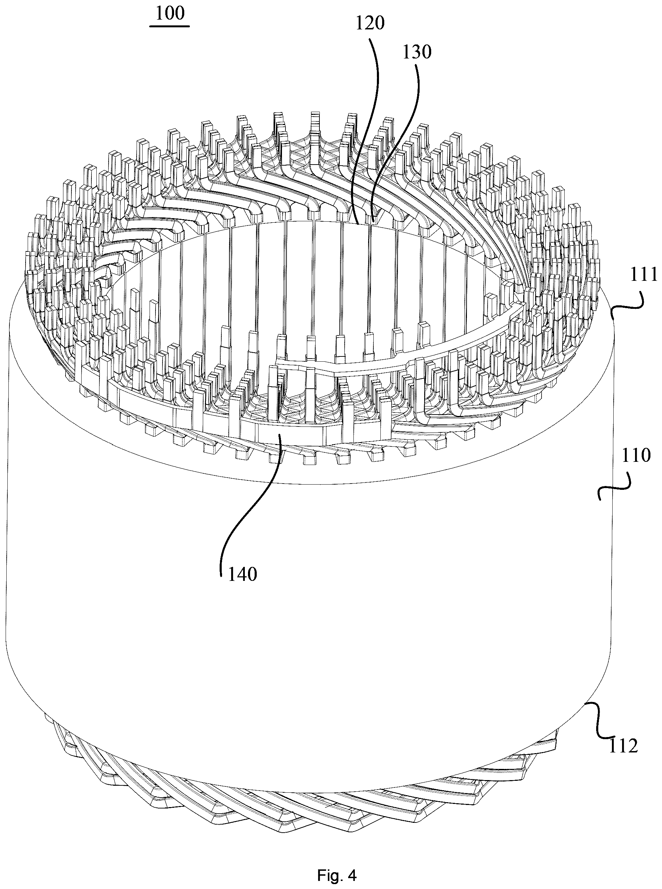

Provided in the embodiment of the invention is an electric motor winding. Fig. 1 is a structural schematic diagram of an electric motor winding provided in the embodiment of the invention. The motor winding may be a stator winding or a rotor winding and may be arranged on a stator iron core or a rotor iron core of an electric motor. Fig. 2 is a structural schematic diagram of a first segmented coil unit provided in the embodiment of the invention. Fig. 3 is a distribution connection schematic diagram of one phase of winding of the electric motor winding provided in the embodiment of the invention. Fig. 4 is a structural schematic diagram of an electric motor stator provided in the embodiment of the invention. As shown in Figs. 1-4, the electric motor winding includes: at least one first segmented coil group 210.

As shown in Figs. 1 and 2, each first segmented coil assembly 210 includes N first segmented coil units 215, for example, a first first segmented coil unit 215-1, a second first segmented coil unit 215-2, a third first segmented coil unit 215-3,..., an (N - 1)-th first segmented coil unit 215-(N - 1), and an N-th first segmented coil unit 215-N, and any one of the first segmented coil units 215 includes M first hairpin coils 311 with different slot pitches, wherein N ≥ 6, M ≥ 2, and N and M are integers.

As shown in Fig. 2, any one of the first hairpin coils 311 includes: a first slot outer end portion 3111, a first slot inner portion 3112, a first slot outer bending portion 3113, a second slot inner portion 3114 and a second slot outer end portion 3115 which are connected sequentially, the first slot inner portion 3112 and the second slot inner portion 3114 are located in different slots, the first slot outer end portion 3111 and the second slot outer end portion 3115 are extending oppositely in a circumferential direction (that is, a peripheral direction); and the M first hairpin coils 311 are arranged concentrically.

As shown in Figs. 1 and 3, the N first segmented coil units 215 of each first segmented coil group 210 are arranged sequentially in the circumferential direction, and the parts in the N * M slots are distributed in two layers in a radial direction (that is, a diameter direction).

As shown in Figs. 1 and 3, first slot inner portions 3112 of the M first hairpin coils 311 of any one of the first segmented coil units 215 are located in M adjacent slots of a first layer, and second slot inner portions 3114 of the M first hairpin coils 311 of any one of the first segmented coil units 215 are located in M adjacent slots of a second layer.

As shown in Fig. 1, first slot inner portions 3112 of the M first hairpin coils 311 of the n-th first segmented coil unit 215 and first slot inner portions 3112 of the M first hairpin coils 311 of the (n + 1)-th first segmented coil unit 215 are located in 2M adjacent slots of the first layer, and second slot inner portions 3114 of the M first hairpin coils 311 of the n-th first segmented coil unit 215 and second slot inner portions 3114 of the M first hairpin coils 311 of the (n + 1)-th first segmented coil unit are located in 2M adjacent slots of the second layer, wherein n = 1, 2... N - 1, and n is an integer; the first slot inner portions 3112 of the M first hairpin coils 311 of the N-th first segmented coil unit 215 and the first slot inner portions 3112 of the M first hairpin coils 311 of the 1st first segmented coil unit 215 are located in 2M adjacent slots of the first layer, and the second slot inner portions 3114 of the M first hairpin coils 311 of the N-th first segmented coil unit 215 and the second slot inner portions 3114 of the M first hairpin coils 311 of the 1st first segmented coil unit 215 are located in 2M adjacent slots of the second layer.

As shown in Figs. 1 and 4, first slot outer bending portions 3113 of all the first hairpin coils 311 of the at least one first segmented coil group 210 are located on one side of an electric motor, and first slot outer end portions 3111 and second slot outer end portions 3115 of all the first hairpin coils 311 of the at least one first segmented coil group 210 are located on the other side of the electric motor.

Fig.1 illustratively shows a condition that the electric motor winding includes one first segmented coil group 210. In Fig. 1, an extending direction of A1A2 is parallel to the axial direction, an extending direction of B1B2 is the circumferential direction, and O1O2, O1O3 and O1O4 are three radial extending directions drawn in examples. Only parts of the first segmented coil units are marked illustratively in Fig. 1, and the serial numbers of the remaining first segmented coil units may be determined sequentially according to positions. In an embodiment, M equals the number of slots per pole per phase of the electric motor, and M is an even number. In an embodiment, M equals 2, slot pitches of the first slot inner portions 3112 and the second slot inner portions 3114 of the two first hairpin coils 311 of the first segmented coil unit 215 are a long pitch and a short pitch respectively (that is, slot pitches of the first slot inner portions 3112 and the second slot inner portions 3114 of one first hairpin coils 311 are long pitches, and slot pitches of the first slot inner portions 3112 and the second slot inner portions 3114 of the other first hairpin coils 311 are short pitches), the long pitch is 1 greater than a full pitch and the short pitch is 1 less than the full pitch. Fig. 2 illustratively shows a condition that the first segmented coil unit 215 includes two first hairpin coils with different slot pitches, D1 and D2, respectively, wherein D1 < D2. The electric motor winding may be single-phase or multi-phase. The electric motor winding may be three-phase, and N is a multiple of 3. If the phase number of the electric motor winding equals X, (X-I) * M slots are provided between the first slot inner portion 3112 and the second slot inner portion 3114 of the first hairpin coil 215 located in the middle of the first segmented coil unit 215. The distribution connection schematic diagram of each phase of winding is similar, and Fig. 3 illustratively shows the distribution connection schematic diagram of the U-phase winding, and the V-phase winding or the W-phase winding is the U-phase winding moved by M slots or 2M slots in the circumferential direction. In an embodiment, distance spans, in the circumferential direction, of the first slot outer end portion 3111 and the second slot outer end portion 3115 of the first hairpin coil 311 each is half of the pitch. Optionally, distance spans, in the circumferential direction, of the first slot outer end portion 3111 and the second slot outer end portion 3115 of the first hairpin coil 311 each is half of the full pitch, so as to make extension ends requiring welding arranged in the radial direction. The first segmented coil group 210 is used for forming an X-phase winding, and each phase of winding has 2M parallel branches. The embodiment of the invention is described by taking three phases as examples, the three-phase winding may includes a U phase, a V phase and a W phase, and the pole number of the electric motor winding is 8 as an example. In each figure of the embodiment of the invention, 48 slots are used as examples, that is, the number of the slots 130 of the stator core is 48, and the number of teeth 120 is 48. The first slot outer bending portions 3113 of all the first hairpin coils 311 of the at least one first segmented coil group 210 are located on one side 111 of the stator core 110, and the first slot outer end portions 3111 and the second slot outer end portions 3115 of all the first hairpin coils 311 of the at least one first segmented coil group 210 are located on the other side 112 of the stator core 110.

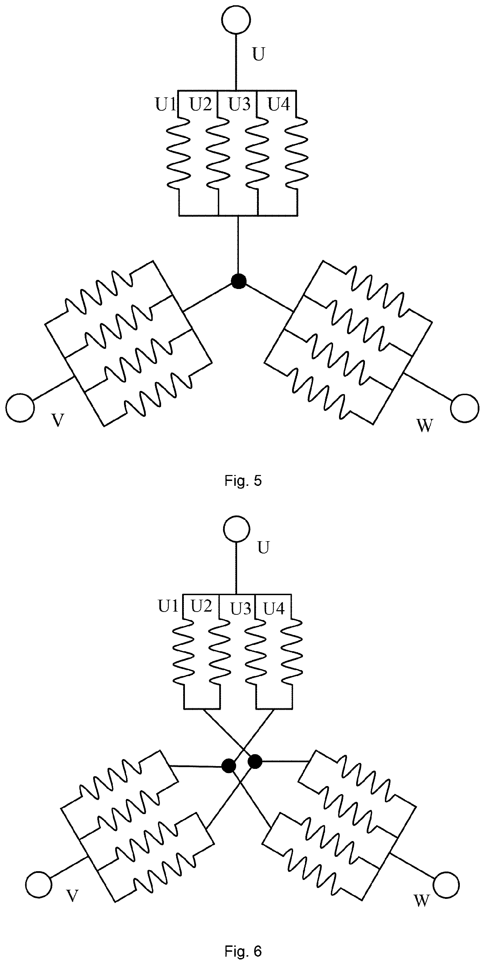

It should be noted that the slot numbers in Fig. 3 are 1-48, and the U phase includes four branches, U1, U2, U3, and U4, separately, in the first segmented coil group 210, wherein U-phase outgoing lines in Fig. 3 may be connected, and U-phase neutral points in Fig. 3 may be connected, so as to form the U-phase winding. Fig. 5 is a connection schematic diagram of one electric motor winding provided in an embodiment of the invention. Fig. 6 is a connection schematic diagram of another electric motor winding provided in an embodiment of the invention. The four branches, U1, U2, U3, U4, formed by each phase of winding in the first segmented coil group 210 may be connected as desired. As shown in Fig. 4, the neutral points of the four branches are connected by means of a bus-barwire 140. Symmetric center lines of two adjacent first segmented coil units 215 are closest to each other, and each symmetric center line is located in the middle of the first slot inner portion 3112 and the second slot inner portion 3114 of the first hairpin coil 215 which located in the middle of the first segmented coil units 215 and extend in the axial direction.

According to the technical solution in the embodiments, M first hairpin coils which are different in slot pitch and are arranged concentrically serve as a first segmented coil unit of the motor winding, the N first segmented coil units are arranged sequentially in the circumferential direction, parts in N * M slots are distributed in two layers in the radial direction, which forms a first segmented coil group, wherein the first slot outer end portion and the second slot outer end portion of the first hairpin coil extend oppositely in the circumferential direction, the first slot inner portions of the M first hairpin coils of any one of the first segmented coil units are located in the M adjacent slots of the first layer, the second slot inner portions of the M first hairpin coils of any one of the first segmented coil units are located in the M adjacent slots of the second layer, the first slot inner portions of the M first hairpin coils of any two adjacent first segmented coil units are located in the 2M adjacent grooves of the first layer, the second slot inner portions of the M first hairpin coils of any two adjacent first segmented coil units are located in the 2M adjacent grooves of the second layer, accordingly, types of the used coil units are less, an arrangement mode is simple, the complexity of a manufacturing process is reduced, the production cost is reduced, and the machining efficiency is improved.

Optionally, on the basis of the above-described embodiments, as shown in Figs. 1 and 3, the first slot outer end portion and the second slot outer end portion each have an extension end, extension ends of the first slot outer end portions of the 2X first segmented coil units 215 of the first segmented coil group 210 serve as connection ends, and in any one of the first segmented coil groups 210, except for an extension end in the same radial direction as the extension end serving as the connection end, two extension ends, in the same radial direction, in the remaining extension ends are connected. Electrical connection is achieved by welding, and each phase of winding forms an identical or similar electrical connection relationship as in Fig. 3. In an embodiment, the extension ends of the first slot outer end portions of the adjacent 2X first segmented coil units 215 of the first segmented coil group 210 serve as connection ends.

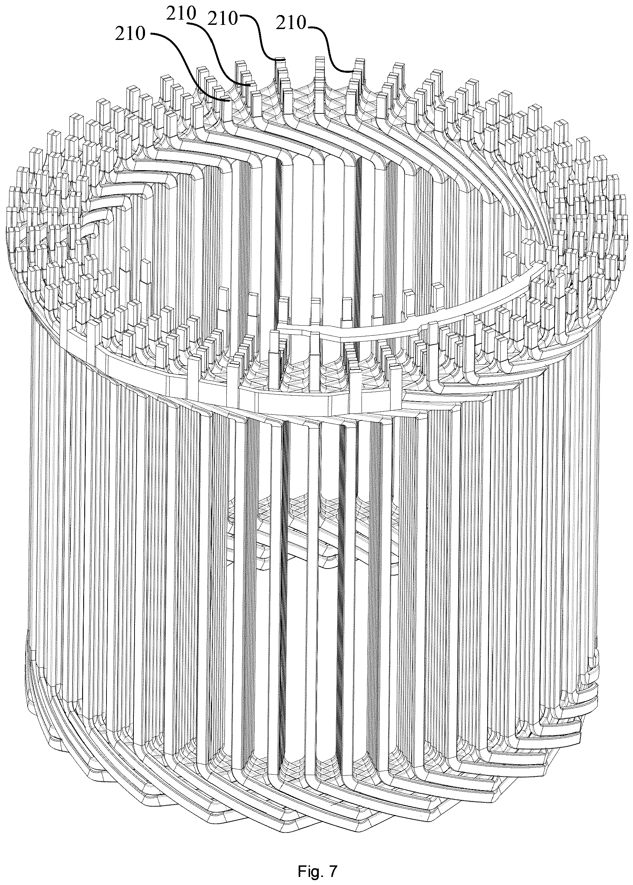

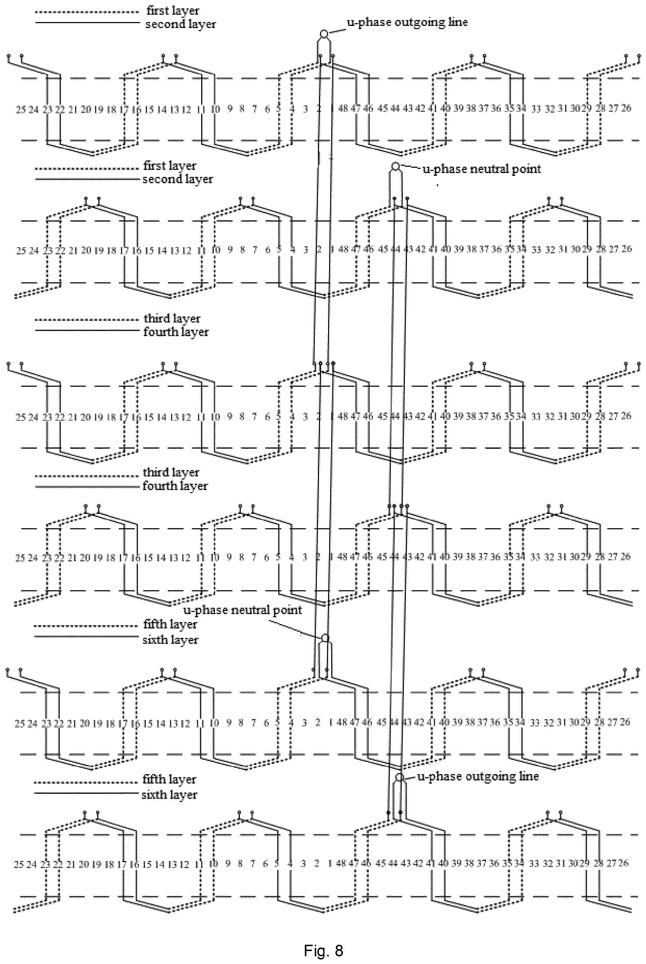

Provided in the embodiment of the invention is another electric motor winding. Fig. 7 is a structural schematic diagram of another electric motor winding provided in the embodiment of the invention. Fig. 8 is a distribution connection schematic diagram of one phase of winding of another electric motor winding provided in an embodiment of the invention. On the basis of the above-described embodiments, the electric motor winding includes at least two first segmented coil groups 210 arranged in a surrounding manner in the radial direction.

The 2M parallel branches of the corresponding phase windings of the two adjacent first segmented coil groups 210 are connected separately and correspondingly in series. Fig. 7 illustratively shows a condition that four first segmented coil groups are arranged in a surrounding manner in the radial direction. Fig. 8 illustratively shows a distribution connection diagram of the U-phase winding when the three first segmented coil groups are arranged in a surrounding manner in the radial direction. A first layer and a second layer in Fig. 8 correspond to a distribution connection condition of U-phase windings in two layers of one first segmented coil group, a third layer and a fourth layer in Fig. 8 correspond to a distribution connection condition of U-phase windings in two layers of another first segmented coil group, and a fifth layer and a sixth layer in Fig. 8 correspond to a distribution connection condition of U-phase windings in two layers of a third first segmented coil group. The first to sixth layers in Fig. 8 are arranged sequentially in the radial direction. The four branches of each phase of winding of the three first segmented coil groups 210 are connected separately and correspondingly in series. At least two first segmented coil groups 210 are arranged in a surrounding manner in the radial direction, and the number of layers, in the slot, of the formed electric motor winding is an even number.

In an embodiment, on the basis of the above-described embodiments, as shown in Figs. 7 and 8, the extension ends of the first slot outer end portions of the 2X first segmented coil units 215 of the first segmented coil group 210 serve as the connection ends, and in any one of the first segmented coil groups 210, except for an extension end in the same radial direction as the extension end serving as the connection end, two extension ends, in the same radial direction, in the remaining extension ends are connected electrically; and in the extension ends which are located in the same radial direction as the extension ends serving as the connection ends, except for the extension ends serving as the connection ends, every two adjacent extension ends in the remaining extension ends are connected electrically. In an embodiment, the extension ends of the first slot outer end portions of the adjacent 2X first segmented coil units 215 of the first segmented coil group 210 serve as connection ends. Electrical connection is achieved by welding, and each phase of winding forms an identical or similar electrical connection relationship as in Fig. 8.

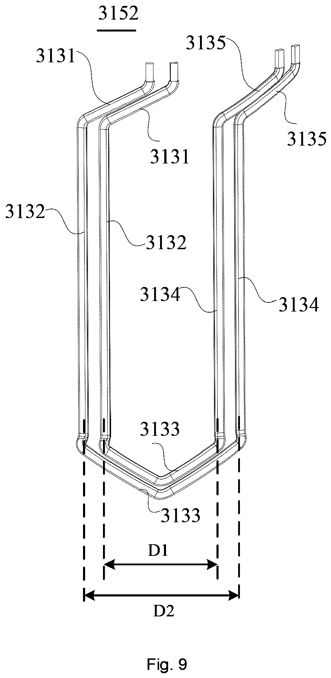

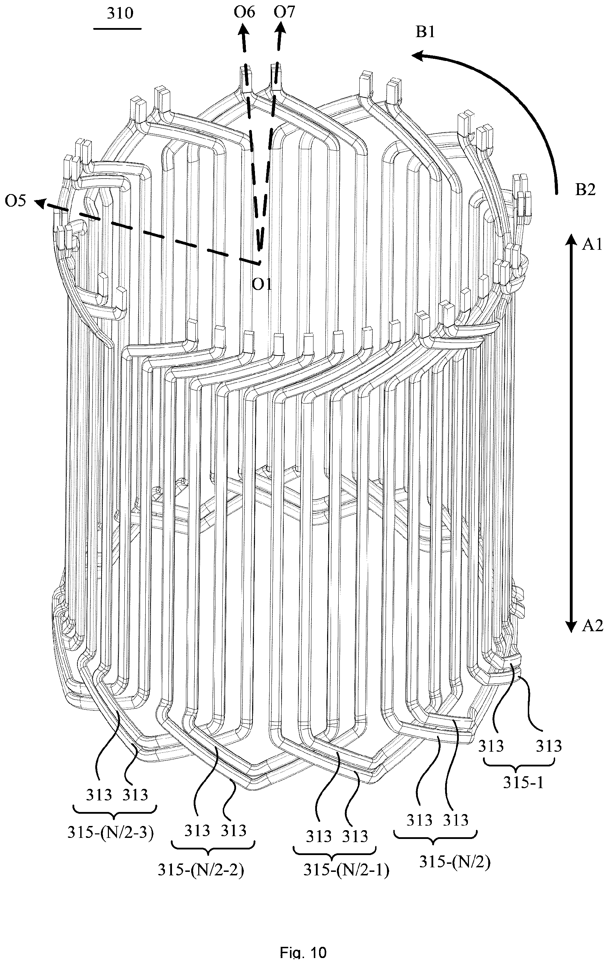

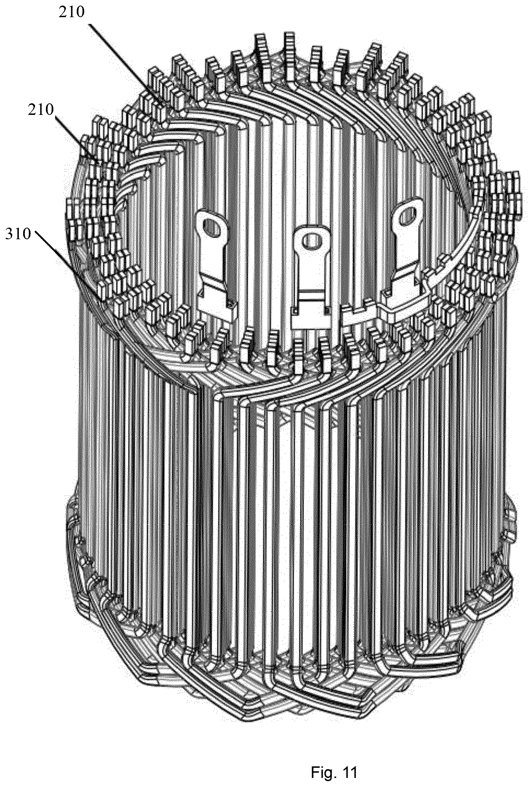

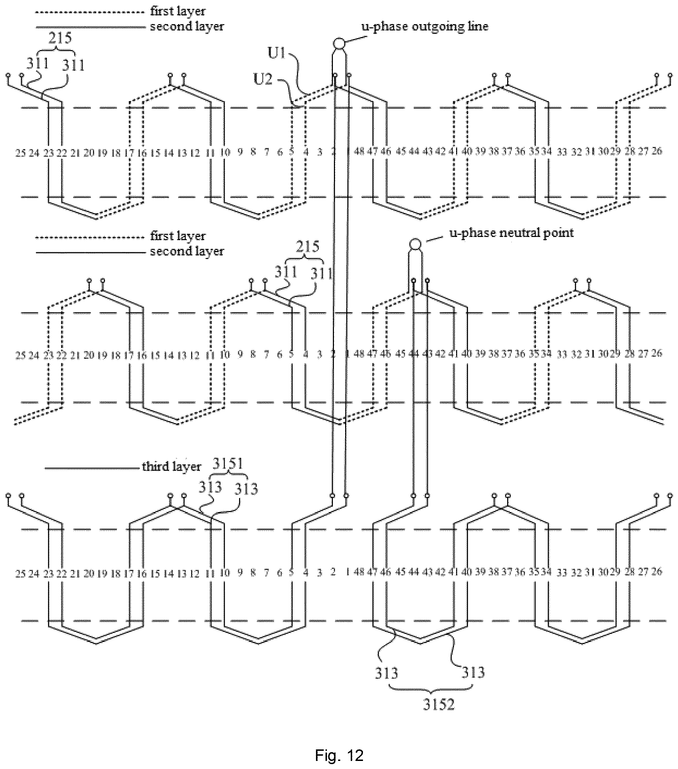

Provided in the embodiment of the invention is another electric motor winding. Fig. 9 is a structural schematic diagram of a fourth segmented coil unit provided in the embodiment of the invention. Fig. 10 is a structural schematic diagram of a second segmented coil group provided in the embodiment of the invention. Fig. 11 is a structural schematic diagram of another electric motor winding provided in the embodiment of the invention. Fig. 12 is a distribution connection schematic diagram of one phase of winding of another electric motor winding provided in an embodiment of the invention. On the basis of the above-described embodiments, as shown in Figs. 9-12, the electric motor winding further includes a second segmented coil group 310. As shown in Fig. 11, the second segmented coil group 310 and the at least one first segmented coil group 210 are arranged in a surrounding manner in the radial direction, the second segmented coil group 310 is located at an outermost or innermost side.

As shown in Fig. 10, the second segmented coil group 310 includes N/2 second segmented coil units 315, for example, a second segmented coil unit 315-1,... a second segmented coil unit 315-(N/2 - 3), a second segmented coil unit 315-(N/2 - 2), a second segmented coil unit 315-(N/2 - 1), and a second segmented coil unit 315-(N/2), any one of the second segmented coil units 315 includes M second hairpin coils 313.

As shown in Figs. 9 and 10, any one of the second hairpin coils 315 includes: a third slot outer end portion 3131, a third slot inner portion 3132, a second slot outer bending portion 3133, a fourth slot inner portion 3134 and a fourth slot outer end portion 3135 which are connected sequentially, the third slot inner portion 3132 and the fourth slot inner portion 3134 are located in different slots; the M second hairpin coils 313 are arranged concentrically.

As shown in Fig. 10, the N/2 second segmented coil units 315 of the second segmented coil group 310 are arranged sequentially in the circumferential direction, and parts in the N * M slots are distributed in one layer in the radial direction.

As shown in Figs. 10 and 12, the third slot inner portions 3132 of the M second hairpin coils 313 of any one of the second segmented coil units 315 are located in M adjacent slots, and the fourth slot inner portions 3134 of the M second hairpin coils 313 of any one of the second segmented coil units 315 are located in M adjacent slots.

As shown in Fig. 10, the fourth slot inner portions 3134 of the M second hairpin coils 313 of the k-th second segmented coil unit 315 and the third slot inner portions 3132 of the M second hairpin coils 313 of the (k + 1)-th second segmented coil unit 315 are located in 2M adjacent slots, wherein k = 1, 2... (N/2) - 1, k is an integer, and N is an even number.

As shown in Fig, 10, the fourth slot inner portions 3134 of the M second hairpin coils 313 of the (N/2)^{th} second segmented coil unit 315 and the third slot inner portions 3132 of the M second hairpin coils 313 of the first second segmented coil unit 315 are located in 2M adjacent slots.

In the second segmented coil group 310 and the at least one first segmented coil group 210, the first slot outer bending portions 3113 of all the first hairpin coils 311 and the second slot outer bending portions 3133 of all the second hairpin coils 313 are located on one side of the electric motor, and the first slot outer end portions 3111 and the second slot outer end portions 3115 of all the first hairpin coils 311 and the third slot outer end portions 3131 and the fourth slot outer end portions 3135 of all the second hairpin coils 313 are located on the other side of the electric motor.

As shown in Fig. 10, the N/2 second segmented coil units 315 have K third segmented coil units 3151 and X fourth segmented coil units 3152, and the phase number of the electric motor winding equals X, wherein K and X are integers, K ≥ 1, (N/2) - K ≥ 1, and X = (N/2) - K.

The third slot outer end portion 3131 and the fourth slot outer end portion 3135 of the second hairpin coil 313 of any one of the third segmented coil units 3151 extend oppositely in the circumferential direction; and as shown in Fig. 9, the third slot outer end portion 3131 and the fourth slot outer end portion 3135 of the second hairpin coil 313 of any one of the fourth segmented coil units 3152 extend in the same direction in the circumferential direction.

Wherein, extending directions of the third slot outer end portion 3131 and the fourth slot outer end portion 3135 of the second hairpin coil 313 of the third segmented coil unit 3151 are respectively identical to extending directions of the third slot outer end portion 3111 and the fourth slot outer end portion 3115 of the first hairpin coil 311 of the first segmented coil unit 215 (i.e. The third slot outer end portion 3111 and the fourth slot outer end portion 3115 of the first hairpin coil 311 of the first segmented coil unit 215 extend oppositely in the circumferential direction).

As shown in Fig. 10, the first to the (N/2 - X)-th second segmented coil units 315 are the third segmented coil units 3151, and the (N/2 - X + 1)-th to the N/2-th second segmented coil units 315 are the fourth segmented coil units 3152. In Fig. 10, the second segmented coil unit 315-(N/2 - 2), the second segmented coil unit 315-(N/2 - 1), and the second segmented coil unit 315-(N/2) are fourth segmented coil units, and the remaining second segmented coil units 315 are third segmented coil units.

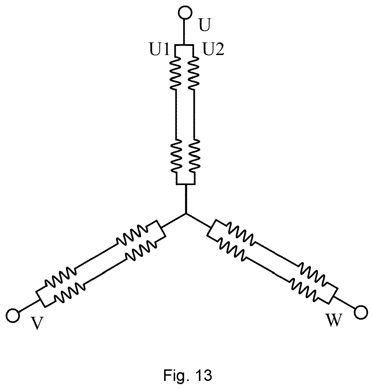

In Fig. 10, an extending direction of A1A2 is parallel to the axial direction, an extending direction of B1B2 is the circumferential direction, and O1O5, O1O6 and O1O7 are three radial extending directions drawn in examples. Only parts of the second segmented coil units are marked illustratively in Fig. 10, and the serial numbers of the remaining second segmented coil units is determined sequentially according to positions. Fig. 11 illustratively shows a condition that the second segmented coil group 310 and two first segmented coil groups 210 are arranged in a surrounding manner in the radial direction. Fig. 12 illustratively shows a distribution connection diagram of one phase of winding when the second segmented coil group 310 and one first segmented coil group 210 are arranged in a surrounding manner in the radial direction. The first to third layers in Fig. 12 are arranged sequentially in the radial direction. The first segmented coil group occupies the first and second layers in Fig. 12, and the second segmented coil group occupies the third layer in Fig. 12. 2M parallel branches of a corresponding phase winding of the first segmented coil group 210 adjacent to the second segmented coil group 310 are connected in series with 2M parallel branches of a corresponding phase winding formed by K third segmented coil units 3151 of the second segmented coil group 310; in the second segmented coil group 310, the K third segmented coil units 3151 are used for forming an X-phase winding, and each phase of winding has 2M parallel branches; and any one of the fourth segmented coil units 3152 is used for connecting the M parallel branches with the other M parallel branches in the one phase of winding in series. According to different numbers of branches, a segmented coil only needs to arrange a fourth segmented coil unit 3152 at tail ends of two parallel branches of four branches formed by each phase of winding of the at least one first segmented coil group 210 and electrically connect the fourth segmented coil unit with one ends of the other two parallel branches by means of welding, so as to form two branches U1 and U2, which reduces the use of collecting bars. Fig. 13 is a connection schematic diagram of another electric motor winding provided in the embodiment of the invention. The four branches of one phase of winding are connected in series by means of the fourth segmented coil unit 3152 at the tail ends to form two branches. According to the embodiment of the invention, inter-phase collecting bars may be cancelled, direct connection among phases is achieved, and a shape of a conductor inside the stator winding is single, which reduces the collecting bars, the types of the conductors and the production cost, and improves the machining efficiency. The second segmented coil group 310 and the at least one first segmented coil group 210 are arranged in a surrounding manner in the radial direction, the number of layers, in the slot, of the formed electric motor winding is an odd number, and the number of the first segmented coil groups 210 may be increased as required.

In an embodiment, the segmented coil is shown in Fig. 10, in the second segmented coil group 310, the fourth slot inner portions 3134 of the M second hairpin coils 313 of the m-th second segmented coil unit 315 and the third slot inner portions 3132 of the M second hairpin coils 313 of the (m + 1)-th second segmented coil unit 315 are located in 2M adjacent slots; 2 * (X - 1) * M slots are provided between the third slot inner portions 3132 of the M second hairpin coils 313 of the m-th second segmented coil unit 215 and the fourth slot inner portions 3134 of the M second hairpin coils 313 of the (m + 1)-th second segmented coil unit 315, wherein m = 1, 2... N/2 - 1, and m is an integer; and 2 * (X - 1) * M slots are provided between the third slot inner portions 3132 of the M second hairpin coils 313 of the N/2-th second segmented coil unit 315 and the fourth slot inner portions 3134 of the M second hairpin coils 313 of the first second segmented coil unit 315.

In an embodiment, distance spans, in the circumferential direction, of the third slot outer end portion 3131 and the fourth slot outer end portion 3135 of the second hairpin coil 313 each is half of the pitch. In an embodiment, distance spans, in the circumferential direction, between the third slot outer end portion 3131 and the fourth slot outer end portion 3135 of the second hairpin coil 313 each is half of the full pitch, so as to make extension ends requiring welding arranged in the radial direction.

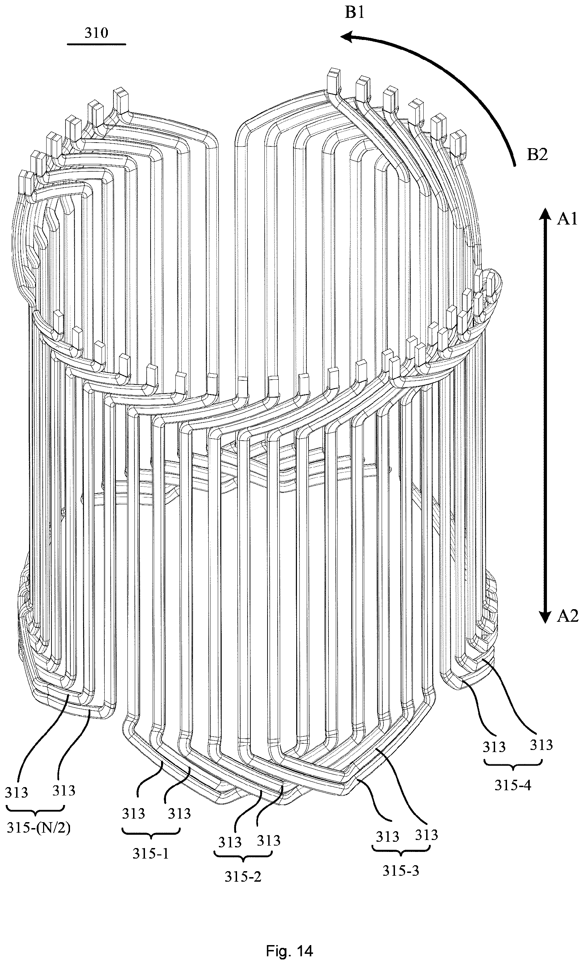

It should be noted that arrangement positions of the X second segmented coil units 315 may be adjacent or not, and the outgoing line or neutral point of each phase of winding of the motor winding may be in a plurality of continuously adjacent slots, or may be in a plurality of spaced slots. Fig. 14 is a structural schematic diagram of another second segmented coil group provided in the embodiment of the invention. As shown in Fig. 14, every X second segmented coil units in the second segmented coil group are divided into a first group, the X second segmented coil units in each first group are sequentially wound, and the plurality of first groups are arranged in the circumferential direction. In Fig. 14, the second segmented coil unit 315-1, the second segmented coil unit 315-2, and the second segmented coil unit 315-3 are fourth segmented coil units, and the remaining second segmented coil units 315 are third segmented coil units. Parts of the second segmented coil units are marked illustratively in Fig. 14 only, and the serial numbers of the remaining second segmented coil units may be determined sequentially according to positions.

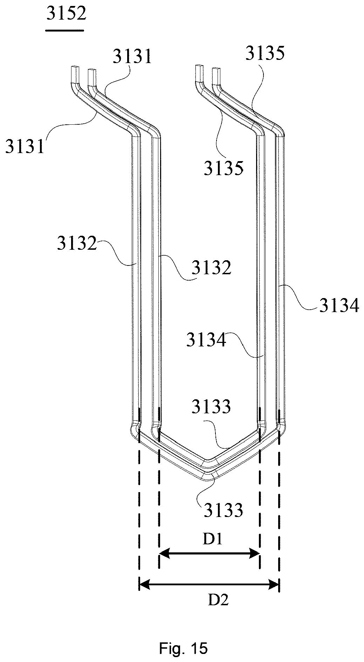

It should be noted that Fig. 15 is a structural schematic diagram of another fourth segmented coil unit provided in an embodiment of the invention. The third slot outer end portion 3131 and the second slot outer end portion 3135 of the fourth segmented coil unit 3152 in Figs. 9 and 15 extend differently in the circumferential direction, and the third slot outer end portion 3131 and the fourth slot outer end portion 3135 of the fourth segmented coil unit 3152 in Fig. 9 extend rightwards in the circumferential direction; and the third slot outer end portion 3131 and the fourth slot outer end portion 3135 of the fourth segmented coil unit 3152 in Fig. 15 extend leftwards in the circumferential direction. It can be arranged as required, and if a slot inner portion of one layer, close to the second segmented coil group 310, of the first segmented coil group 210 adjacent to the second segmented coil group 310 is the first slot inner portion 3112, circumferential extending directions of the third slot outer end portion 3131 and the fourth slot outer end portion 3135 of the fourth segmented coil unit are opposite to a circumferential extending direction of the first slot outer end portion 3111 of the first segmented coil group 210. If a slot inner portion of one layer, close to the second segmented coil group 310, of the first segmented coil group 210 adjacent to the second segmented coil group 310 is the second slot inner portion 3114, circumferential extending directions of the third slot outer end portion 3131 and the fourth slot outer end portion 3135 of the second segmented coil unit are opposite to a circumferential extending direction of the second slot outer end portion 3115 of the first segmented coil group 210.

In an embodiment, on the basis of the above-described embodiments, as shown in Figs. 11 and 12, the first slot outer end portion, the second slot outer end portion, the third slot outer end portion, and the fourth slot outer end portion all have extension ends, and extension ends, away from the second segmented coil group 310, of 2X first segmented coil units 311 of the first segmented coil group 210 serve as connection ends, and in any one of the first segmented coil groups 210, except for the extension end in the same radial direction as the extension end serving as the connection end, two extension ends, in the same radial direction, in the remaining extension ends are connected electrically; in any one of the second segmented coil groups 310, except for the extension end in the same radial direction as the extension end serving as the connection end, two extension ends, in the same radial direction, in the remaining extension ends are connected electrically; and in the extension ends which are located in the same radial direction as the extension ends serving as the connection ends, except for the extension ends serving as the connection ends, every two adjacent extension ends in the remaining extension ends are connected electrically. Electrical connection is achieved by welding, and each phase of winding forms an identical or similar electrical connection relationship as in Fig. 12.

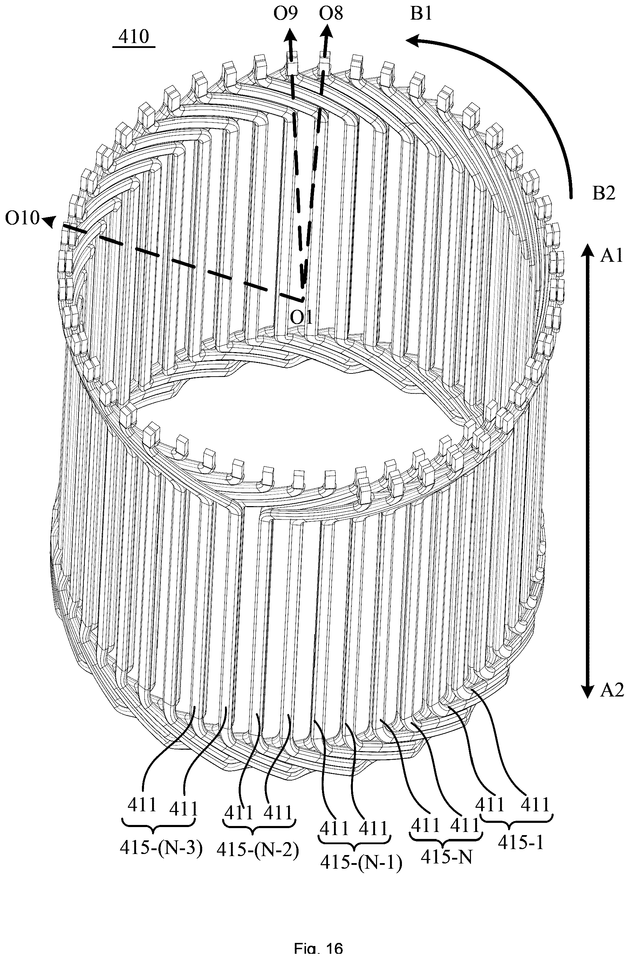

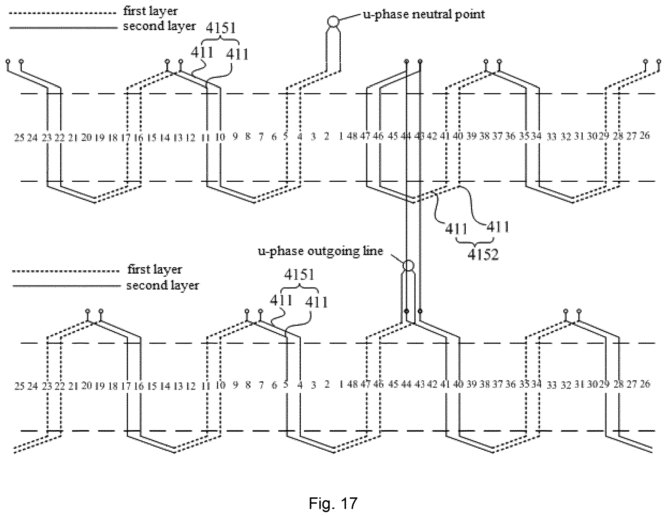

Provided in the embodiment of the invention is another electric motor winding. Fig. 16 is a structural schematic diagram of another electric motor winding provided in the embodiment of the invention. Fig. 17 is a distribution connection schematic diagram of one phase of winding of another electric motor winding provided in an embodiment of the invention. The electric motor winding includes: a third segmented coil group 410.

As shown in Fig. 16, the third segmented coil group 410 includes N fifth segmented coil units 415, for example, a fifth segmented coil unit 415-1,... a fifth segmented coil unit 415-(N - 3), a fifth segmented coil unit 415-(N - 2), a second segmented coil unit 415-(N - 1), and a fifth segmented coil unit 415-N, any one of the fifth segmented coil units 415 includes M third hairpin coils 411 with different slot pitches.

As shown in Fig. 16 and 17, any one of the third hairpin coils 411 includes: a fifth slot outer end portion, a fifth slot inner portion, a third slot outer bending portion, a sixth slot inner portion and a sixth slot outer end portion which are connected sequentially, wherein the fifth slot inner portion and the sixth slot inner portion are located in different slots; and the M third hairpin coils 411 are arranged concentrically.

As shown in Fig. 16, the N fifth segmented coil units 415 of the third segmented coil group 410 are arranged sequentially in the circumferential direction, and the parts in the N * M slots are distributed in two layers in the radial direction.

As shown in Figs. 16 and 17, the fifth slot inner portions of the M third hairpin coils 411 of any one of the fifth segmented coil units 415 are located in M adjacent slots of a first layer of the third segmented coil group 410, and the sixth slot inner portions of the M third hairpin coils 411 of any one of the fifth segmented coil units 415 are located in M adjacent slots of a second layer of the third segmented coil group 410.

As shown in Figs. 16 and 17, the fifth slot inner portions 4112 of the M third hairpin coils 411 of the p-th fifth segmented coil unit 415 and the fifth slot inner portions of the M third hairpin coils 411 of the (p + 1)-th fifth segmented coil unit 415 are located in 2M adjacent slots of the first layer of the third segmented coil group 410, and the sixth slot inner portions 4114 of the M third hairpin coils 411 of the p-th fifth segmented coil unit 415 and the sixth slot inner portions 4114 of the M third hairpin coils 411 of the (p + 1)-th fifth segmented coil unit 415 are located in adjacent 2 M slots of the second layer of the third segmented coil group 410, wherein p = 1, 2... N - 1, and p is an integer.

The fifth slot inner portions 4112 of the M third hairpin coils 411 of the N-th fifth segmented coil unit 415 and the fifth slot inner portions 4112 of the M third hairpin coils 411 of the first fifth segmented coil unit 415 are located in 2M adjacent slots of the first layer of the third segmented coil group 410, and the sixth slot inner portions 4114 of the M third hairpin coils 411 of the Nth fifth segmented coil unit 415 and the sixth slot inner portions 4114 of the M third hairpin coils 411 of the first fifth segmented coil unit 415 are located in 2M adjacent slots of the second layer.

The third slot outer bending portions 4113 of all the third hairpin coils 411 of the third segmented coil group 410 are located on one side of an electric motor, and the fifth slot outer end portions 4111 and the sixth slot outer end portions 4115 of all the third hairpin coils 411 of the third segmented coil group 410 are located on the other side of the electric motor.

The N fifth segmented coil units 415 have P sixth segmented coil units 4151 and X seventh segmented coil units 4152, wherein N ≥ 6, M ≥ 2, N, M, X and P are integers, N - P ≥ 1, the phase number of the electric motor winding equals X, and X = N - P.

The fifth slot outer end portion and the sixth slot outer end portion of the third hairpin coil of any one of the sixth segmented coil units 4151 extend oppositely in the circumferential direction; the fifth slot outer end portion and the sixth slot outer end portion of the third hairpin coil of any one of the seventh segmented coil units 4152 extend in the same direction in the circumferential direction; the P sixth segmented coil units are used for forming an X-phase winding, and each phase of winding has 2M parallel branches; and any one of the seventh segmented coil units is used for connecting the M parallel branches with the other M parallel branches in one phase of winding in series.

In an embodiment, the first to the (N - X)-th fifth segmented coil units are sixth segmented coil units 4151, and the (N - X + 1)-th to the N-th fifth segmented coil units are seventh segmented coil units 4152.

In Fig. 16, an extending direction of A1A2 is parallel to the axial direction, an extending direction of B1B2 is the circumferential direction, and O1O8, O1O9 and O1O10 are three radial extending directions drawn in examples. Fig.16 illustratively shows a condition that the electric motor winding includes one third segmented coil group 410. Only parts of the fifth segmented coil units are marked illustratively in Fig. 16, and the serial numbers of the remaining fifth segmented coil units may be determined sequentially according to positions. In Fig. 16, the fifth segmented coil unit 415-(N-2), the fifth segmented coil unit 415-(N-1), and the fifth segmented coil unit 415-N are seventh segmented coil units, and the remaining fifth segmented coil units 415 are sixth segmented coil units. Fig. 17 illustratively shows a distribution connection diagram of one phase of winding when the electric motor winding includes a third segmented coil group. The first to second layers in Fig. 17 are arranged sequentially in the radial direction. The electric motor winding provided in the embodiments uses less types of coil units and is simple in arrangement mode, which may reduce the complexity of a manufacturing process, reduce the production cost, and improve the machining efficiency.

The sixth segmented coil unit 4151 has the identical or similar structure as the first segmented coil unit 311 in Fig. 2. The seventh segmented coil unit 4152 has the identical or similar structure as the fourth segmented coil unit 3152 in Fig. 9 or 15. Arrangement positions of the X seventh segmented coil units 4152 may also be non-adjacent and may be set as required, a seventh segmented coil unit 4152 only needs to be arranged at tail ends of two parallel branches in four branches formed by each phase of winding of the at least one third segmented coil group 410, and to be electrically connected with one ends of the other two parallel branches by means of welding, so as to form two branches U1 and U2, which reduces the use of collecting bars. The four branches of one phase of winding are connected in series by means of the seventh segmented coil unit 4152 at the tail ends to form two branches.

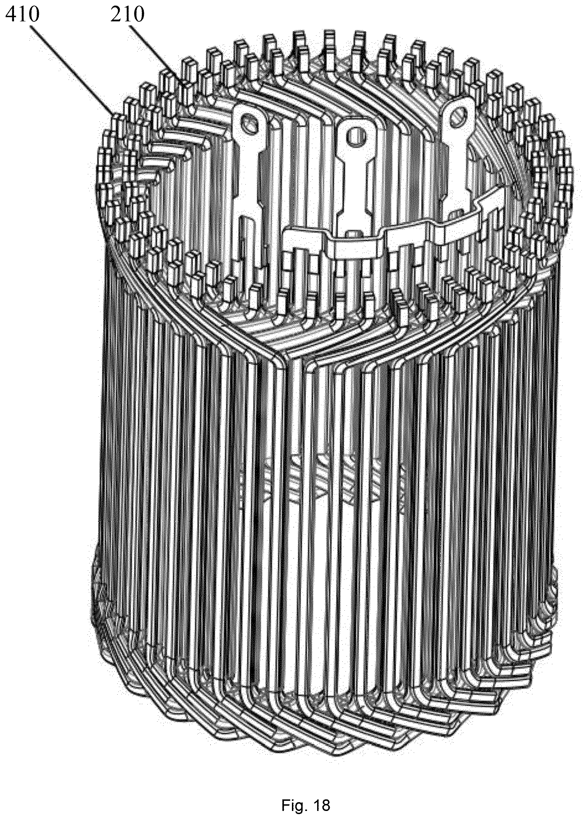

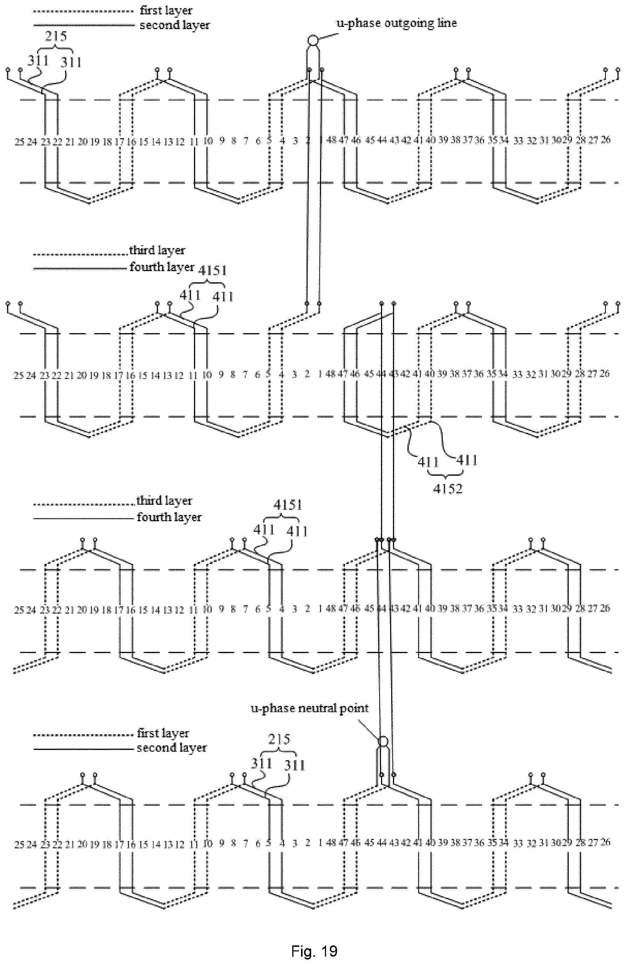

Provided in the embodiment of the invention is another electric motor winding. Fig. 18 is a structural schematic diagram of another electric motor winding provided in the embodiment of the invention. Fig. 19 is a distribution connection schematic diagram of one phase of winding of another electric motor winding provided in an embodiment of the invention. On the basis of the above-described embodiments, as shown in Figs. 1, 16, 18 and 19, the electric motor winding further includes at least one first segmented coil group 210, wherein the third segmented coil group 410 and the at least one first segmented coil group 210 are arranged in a surrounding manner in the radial direction, the third segmented coil group 410 is located at an outermost or innermost side.

Each first segmented coil group 210 includes N first segmented coil units 215, any one of the first segmented coil units 215 including M first hairpin coils 311; any one of the first hairpin coils 311 includes: a first slot outer end portion, a first slot inner portion, a first slot outer bending portion, a second slot inner portion and a second slot outer end portion which are connected sequentially, the first slot inner portion and the second slot inner portion being located in different slots, the first slot outer end portion and the second slot outer end portion extending oppositely in a circumferential direction; and the M first hairpin coils are arranged concentrically.

The N first segmented coil units of the each first segmented coil group 210 are arranged sequentially in the circumferential direction, and the parts in the N * M slots are distributed in two layers in a radial direction.

The first slot inner portions of the M first hairpin coils of any one of the first segmented coil units 215 are located in M adjacent slots of a first layer, and the second slot inner portions of the M first hairpin coils of any one of the first segmented coil units 215 are located in M adjacent slots of a second layer.

The first slot inner portions of the M first hairpin coils of the q-th first segmented coil unit 215 and the first slot inner portions of the M first hairpin coils of the (q + 1-)th first segmented coil unit 215 are located in 2M adjacent slots of the first layer, and the second slot inner portions of the M first hairpin coils of the q-th first segmented coil unit 215 and the second slot inner portions of the M first hairpin coils of the (q + 1)-th first segmented coil unit 215 are located in 2M adjacent slots of the second layer, wherein q = 1, 2... N - 1, and q is an integer.

The first slot inner portions of the M first hairpin coils of the Nth first segmented coil unit 215 and the first slot inner portions of the M first hairpin coils of the 1st first segmented coil unit 215 are located in 2M adjacent slots of the first layer, and the second slot inner portions of the M first hairpin coils of the Nth first segmented coil unit 215 and the second slot inner portions of the M first hairpin coils of the first first segmented coil unit 215 are located in 2M adjacent slots of the second layer.

The third slot outer bending portions of all the third hairpin coils of the third segmented coil group 410 and the first slot outer bending portions of all the first hairpin coils of the at least one first segmented coil group 210 are located on one side of the electric motor; and the fifth slot outer end portions and the sixth slot outer end portions of all the third hairpin coils of the third segmented coil group 410 and the first slot outer end portions and the second slot outer end portions of all the first hairpin coils of the at least one first segmented coil group 210 are located on the other side of the electric motor.

The number of layers, in the slot, of the electric motor winding formed by arranging the third segmented coil group 410 and the at least one first segmented coil group 210 in a surrounding manner in the radial direction is an even number, and the number of the first segmented coil groups 210 may be increased as required. 2M parallel branches of a corresponding phase winding of the first segmented coil group 210 adjacent to the third segmented coil group 410 are connected in series with 2M parallel branches of a corresponding phase winding of P sixth segmented coil units of the third segmented coil group 410. Fig.18 illustratively shows a condition that the electric motor winding includes one third segmented coil group 410 and one first segmented coil group 210. Fig. 19 illustratively shows a distribution connection diagram of one phase of winding when the electric motor winding includes a third segmented coil group 410 and one first segmented coil group 210. A first layer and a second layer in Fig. 19 correspond to a distribution connection condition of U-phase windings in two layers of one first segmented coil group, and a third layer and a fourth layer in Fig. 19 correspond to a distribution connection condition of U-phase windings in two layers of a third segmented coil group. The first to fourth layers in Fig. 19 are arranged sequentially in the radial direction.

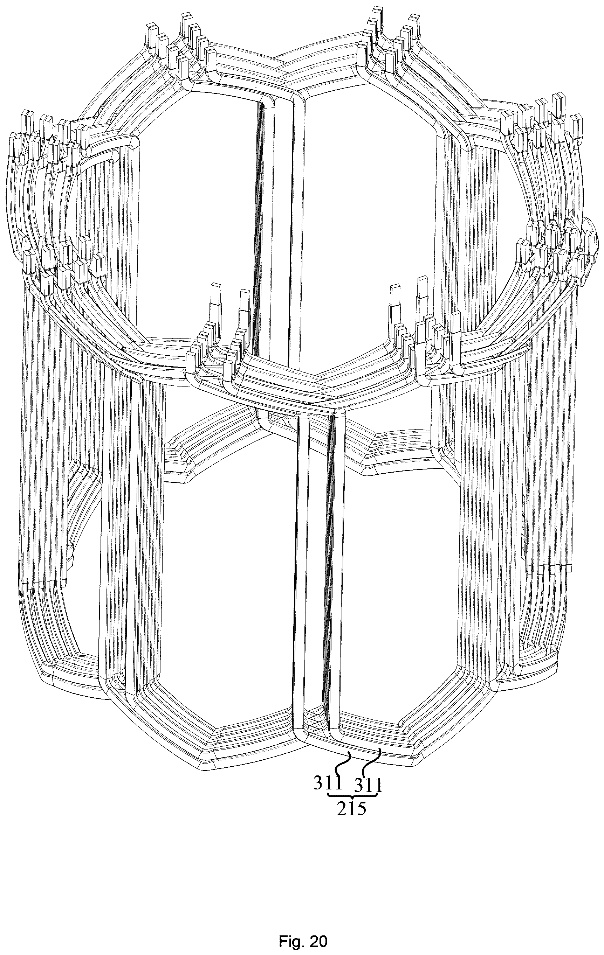

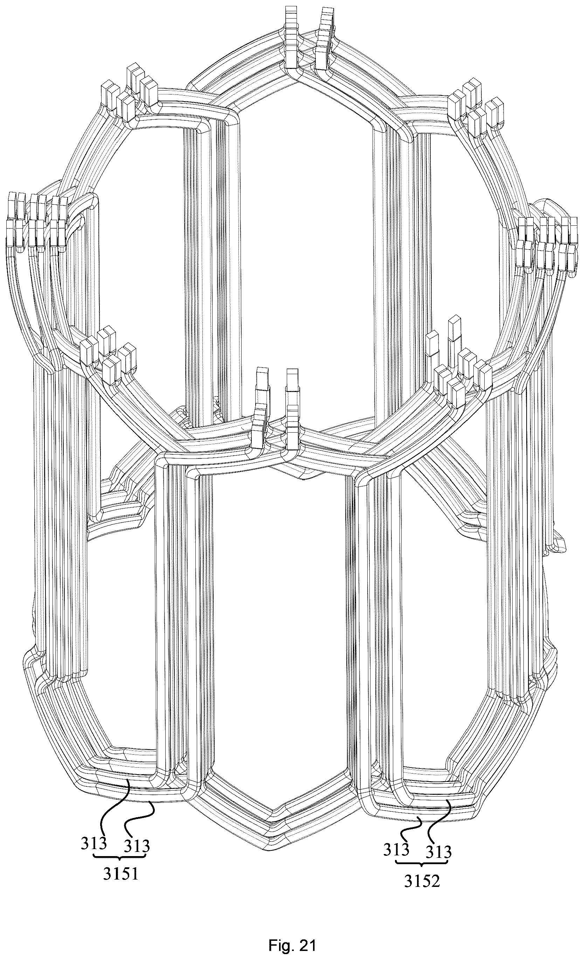

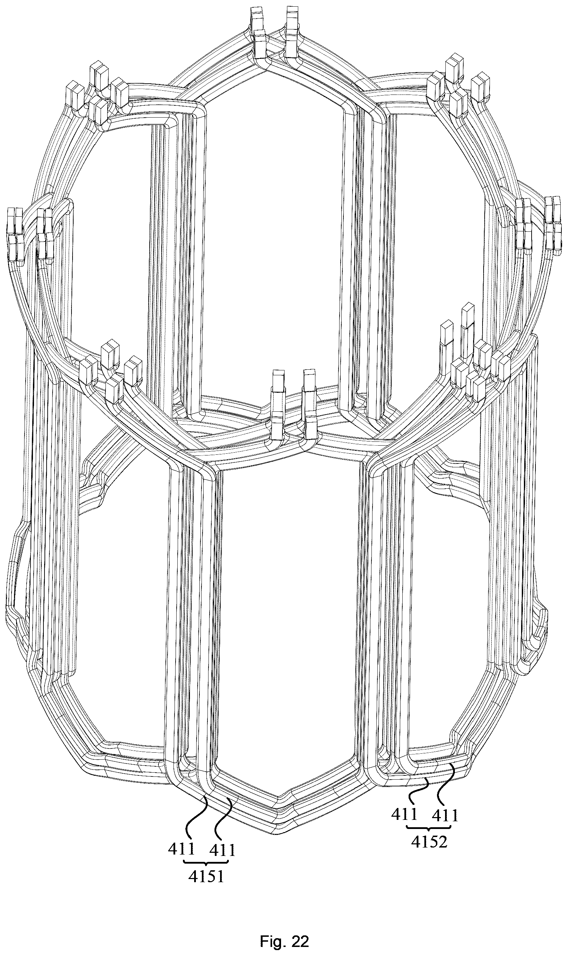

It should be noted that, for ease of understanding, Fig. 20 is a structural schematic diagram of one phase of winding, corresponding to Fig.7, provided in an embodiment of the invention; Fig. 21 is a structural schematic diagram of one phase of winding, corresponding to Fig.11, provided in an embodiment of the invention; and Fig. 22 is a structural schematic diagram of one phase of winding, corresponding to Fig 18, provided in an embodiment of the invention.

Provided in the embodiments of the invention is an electric motor stator. With continuous reference to Fig. 4, the electric motor stator 100 includes: a stator core 110 and the electric motor winding provided in any embodiment of the invention, wherein the stator core 110 is provided with a plurality of slots 130 arranged in a circumferential direction and extending in an axial direction, a first slot inner portion and a second slot inner portion of the first hairpin coil 311 are located in the slots.

The electric motor may be a permanent magnet electric motor or an asynchronous alternating current electric motor. The electric motor stator provided by the embodiment of the invention includes the electric motor winding in the above-described embodiment, and accordingly, the electric motor stator provided by the embodiment of the invention also has the beneficial effects described in the above-described embodiment, which is not described in detail herein.

It is to be noted that the above description is merely preferred embodiments of the invention and principles of the technology employed. It will be understood by those skilled in the art that the invention is not limited to the particular embodiments described herein, and that various obvious changes, readjustments, and mutual combination and substitutions may be made by those skilled in the art without departing from the scope of protection of the invention. Thus, although the invention has been described in greater detail by way of the above embodiments, the invention is not limited to the above embodiments and may include many other equivalent embodiments without departing from the concept of the invention, the scope of the invention is determined by the scope of the appended claims.

## Claims

1. An electric motor winding, comprising:
at least one first segmented coil group;
wherein each first segmented coil group comprises N first segmented coil units, any one of the first segmented coil units comprising M first hairpin coils with different slot pitches, wherein N ≥ 6, M ≥ 2, N is a multiple of 3, and N and M are integers; any one of the first hairpin coils comprises: a first slot outer end portion, a first slot inner portion, a first slot outer bending portion, a second slot inner portion and a second slot outer end portion which are connected sequentially, the first slot inner portion and the second slot inner portion being located in different slots, and the first slot outer end portion and the second slot outer end portion extending oppositely in a circumferential direction; the M first hairpin coils are arranged concentrically; the N first segmented coil units of each first segmented coil group are arranged sequentially in the circumferential direction, and parts in the N * M slots are distributed in two layers in a radial direction;
first slot inner portions of the M first hairpin coils of any one of the first segmented coil units are located in M adjacent slots of a first layer, and second slot inner portions of the M first hairpin coils of any one of the first segmented coil units are located in M adjacent slots of a second layer;
first slot inner portions of M first hairpin coils of an n-th first segmented coil unit and first slot inner portions of M first hairpin coils of an (n + 1)-th first segmented coil unit are located in 2M adjacent slots of the first layer, and second slot inner portions of the M first hairpin coils of the n-th first segmented coil unit and second slot inner portions of the M first hairpin coils of the (n + 1)-th first segmented coil unit are located in 2M adjacent slots of the second layer, wherein n = 1, 2... N - 1, and n is an integer;
first slot inner portions of M first hairpin coils of an N-th first segmented coil unit and first slot inner portions of M first hairpin coils of 1-st first segmented coil unit are located in 2M adjacent slots of the first layer, and second slot inner portions of the M first hairpin coils of the N-th first segmented coil unit and second slot inner portions of the M first hairpin coils of the 1-st first segmented coil unit are located in 2M adjacent slots of the second layer; and
first slot outer bending portions of all the first hairpin coils in the at least one first segmented coil group are located on one side of an electric motor, and first slot outer end portions and second slot outer end portions of all the first hairpin coils in the at least one first segmented coil group are located on the other side of the electric motor.

2. The electric motor winding according to claim 1, the electric motor winding comprising at least two first segmented coil groups arranged in a surrounding manner in the radial direction.

3. The electric motor winding according to claim 1, further comprising a second segmented coil group, wherein the second segmented coil group and the at least one first segmented coil group are arranged in a surrounding manner in the radial direction, the second segmented coil group is located at an outermost or innermost side,
and the second segmented coil group comprises N/2 second segmented coil units, any one of the second segmented coil units comprising M second hairpin coils;
wherein any one of the second hairpin coils comprises: a third slot outer end portion, a third slot inner portion, a second slot outer bending portion, a fourth slot inner portion and a fourth slot outer end portion which are connected sequentially, the third slot inner portion and the fourth slot inner portion being located in different slots; the M second hairpin coils are arranged concentrically;
the N/2 second segmented coil units of the second segmented coil group are arranged sequentially in the circumferential direction, and parts in the N * M slots are distributed in one layer in the radial direction;
third slot inner portions of the M second hairpin coils of the any one of the second segmented coil units are located in M adjacent slots, and fourth slot inner portions of the M second hairpin coils of the any one of the second segmented coil units are located in M adjacent slots;
fourth slot inner portions of M second hairpin coils of a k-th second segmented coil unit and third slot inner portions of M second hairpin coils of a (k + 1)-th second segmented coil unit are located in 2M adjacent slots, wherein k = 1, 2... (N/2) - 1, and k is an integer;
fourth slot inner portions of M second hairpin coils of the (N/2)-th second segmented coil unit and third slot inner portions of M second hairpin coils of a 1st second segmented coil unit are located in 2M adjacent slots;
in the second segmented coil group and the at least one first segmented coil group, first slot outer bending portions of all the first hairpin coils and second slot outer bending portions of all the second hairpin coils are located on one side of the electric motor, and first slot outer end portions and second slot outer end portions of all the first hairpin coils and third slot outer end portions and fourth slot outer end portions of all the second hairpin coils are located on the other side of the electric motor;
the N/2 second segmented coil units have K third segmented coil units and X fourth segmented coil units, and a phase number of the electric motor winding equals X, wherein K and X are integers, K ≥ 1, (N/2) - K ≥ 1, and X = (N/2) - K;
a third slot outer end portion and a fourth slot outer end portion of a second hairpin coil of any one of the third segmented coil units extend oppositely in the circumferential direction;
the third slot outer end portion and the fourth slot outer end portion of the second hairpin coil of any one of the fourth segmented coil units extend in the same direction in the circumferential direction; and
the first to the (N/2 - X)-th second segmented coil units are the third segmented coil units, and the (N/2 - X + 1)-th to the N/2-th second segmented coil units are the fourth segmented coil units.

4. The electric motor winding according to claim 3, wherein distance spans, in the circumferential direction, of the first slot outer end portion and the second slot outer end portion of each first hairpin coil are both half of a pitch.

5. The electric motor winding according to claim 4, wherein distance spans, in the circumferential direction, of the third slot outer end portion and the fourth slot outer end portion of the second hairpin coil are both half of the pitch.

6. The electric motor winding according to claim 1, wherein M equaling 2, slot pitches of the first slot inner portions and the second slot inner portions of the two first hairpin coils of the each first segmented coil unit are a long pitch and a short pitch respectively.

7. The electric motor winding according to claim 5, wherein the first slot outer end portion, the second slot outer end portion, the third slot outer end portion, and the fourth slot outer end portion all have extension ends, and extension ends, away from the second segmented coil group, of 2X first segmented coil units of the first segmented coil group serve as connection ends, and
in any one of the first segmented coil groups, except for an extension end in the same radial direction as the extension end serving as the connection end, two extension ends, in the same radial direction, in remaining extension ends are connected;
in any one of the second segmented coil groups, except for an extension end in the same radial direction as the extension end serving as the connection end, two extension ends, in the same radial direction, in remaining extension ends are connected; and
in the extension ends which are located in the same radial direction as the extension ends serving as the connection ends, except for the extension ends serving as the connection ends, every two adjacent extension ends in the remaining extension ends are connected.

8. The electric motor winding according to claim 1, wherein M equals the number of slots per pole per phase of the electric motor, and M is an even number.

9. An electric motor winding, comprising:
a third segmented coil group, comprising N fifth segmented coil units, wherein any one of the fifth segmented coil units comprises M third hairpin coils with different slot pitches,
any one of the third hairpin coils comprising: a fifth slot outer end portion, a fifth slot inner portion, a third slot outer bending portion, a sixth slot inner portion and a sixth slot outer end portion which are connected sequentially, wherein the fifth slot inner portion and the sixth slot inner portion are located in different slots; the M third hairpin coils are arranged concentrically; the N fifth segmented coil units of the third segmented coil group are arranged sequentially in a circumferential direction, parts in N * M slots are distributed in two layers in a radial direction, fifth slot inner portions of the M third hairpin coils of any one of the fifth segmented coil units are located in M adjacent slots of a first layer of the third segmented coil group, and sixth slot inner portions of the M third hairpin coils of any one of the fifth segmented coil units are located in M adjacent slots of a second layer of the third segmented coil group;
fifth slot inner portions of the M third hairpin coils of a p-th fifth segmented coil unit and fifth slot inner portions of the M third hairpin coils of a (p + 1)-th fifth segmented coil unit are located in 2M adjacent slots of the first layer of the third segmented coil group, and sixth slot inner portions of the M third hairpin coils of the p-th fifth segmented coil unit and sixth slot inner portions of the M third hairpin coils of the (p + 1)-th fifth segmented coil unit are located in 2M adjacent slots of the second layer of the third segmented coil group, wherein p = 1, 2... N - 1, and p is an integer;
fifth slot inner portions of the M third hairpin coils of an N-th fifth segmented coil unit and fifth slot inner portions of the M third hairpin coils of a 1st fifth segmented coil unit are located in 2M adjacent slots of the first layer of the fifth segmented coil group, and sixth slot inner portions of the M third hairpin coils of the N-th fifth segmented coil unit and sixth slot inner portions of the M third hairpin coils of the 1st fifth segmented coil unit are located in 2M adjacent slots of the second layer;
third slot outer bending portions of all the third hairpin coils of the third segmented coil group are located on one side of an electric motor, and fifth slot outer end portions and sixth slot outer end portions of all the third hairpin coils of the third segmented coil group are located on the other side of the electric motor;
N fifth segmented coil units have P sixth segmented coil units and X seventh segmented coil units, wherein N ≥ 6, M ≥ 2, N, M, X and P are integers, N - P ≥ 1, a phase number of the electric motor winding equals X, and X = N - P;
a fifth slot outer end portion and a sixth slot outer end portion of a third hairpin coil of any one of the sixth segmented coil units extend oppositely in the circumferential direction; a fifth slot outer end portion and a sixth slot outer end portion of a third hairpin coil of any one of the seventh segmented coil units extend in the same direction in the circumferential direction; the P sixth segmented coil units are used for forming an X-phase winding, and each phase of winding has 2M parallel branches; and
any one of the seventh segmented coil units is used for connecting the M parallel branches with the other M parallel branches in one phase of winding in series.

10. The electric motor winding according to claim 9, wherein
the first to the (N - X)-th fifth segmented coil units are sixth segmented coil units, and
the (N - X + 1)-th to the N-th fifth segmented coil units are seventh segmented coil units.

11. The electric motor winding according to claim 9, further comprising at least one first segmented coil group, wherein the third segmented coil group and the at least one first segmented coil group are arranged in a surrounding manner in the radial direction, the third segmented coil group is located at an outermost or innermost side,
wherein each first segmented coil group comprises N first segmented coil units, any one of the first segmented coil units comprising M first hairpin coils with different slot pitches; any one of the first hairpin coils comprises: a first slot outer end portion, a first slot inner portion, a first slot outer bending portion, a second slot inner portion and a second slot outer end portion which are connected sequentially, the first slot inner portion and the second slot inner portion being located in different slots, and the first slot outer end portion and the second slot outer end portion extending oppositely in a circumferential direction; the M first hairpin coils are arranged concentrically;
the N first segmented coil units of the each first segmented coil group are arranged sequentially in the circumferential direction, and parts in N * M slots are distributed in two layers in a radial direction;
first slot inner portions of the M first hairpin coils of any one of the first segmented coil units are located in M adjacent slots of a first layer, and second slot inner portions of the M first hairpin coils of the any one of the first segmented coil units are located in M adjacent slots of a second layer;
first slot inner portions of the M first hairpin coils of a q-th first segmented coil unit and first slot inner portions of the M first hairpin coils of a (q + 1)-th first segmented coil unit are located in 2M adjacent slots of the first layer, and second slot inner portions of the M first hairpin coils of the q-th first segmented coil unit and the second slot inner portions of the M first hairpin coils of the (q + 1)-th first segmented coil unit are located in 2M adjacent slots of the second layer, wherein q = 1, 2... N - 1, and q is an integer;
first slot inner portions of the M first hairpin coils of an N-th first segmented coil unit and first slot inner portions of the M first hairpin coils of a 1st first segmented coil unit are located in 2M adjacent slots of the first layer, and second slot inner portions of the M first hairpin coils of the N-th first segmented coil unit and second slot inner portions of the M first hairpin coils of the 1st first segmented coil unit are located in 2M adjacent slots of the second layer;
third slot outer bending portions of all the third hairpin coils of the third segmented coil group and first slot outer bending portions of all the first hairpin coils of the at least one first segmented coil group are located on one side of the electric motor; and fifth slot outer end portions and sixth slot outer end portions of all the third hairpin coils of the third segmented coil group and first slot outer end portions and second slot outer end portions of all the first hairpin coils of the at least one first segmented coil group are located on the other side of the electric motor.

12. An electric motor stator, comprising: a stator core and the electric motor winding according to any one of claims 1-8, wherein the stator core is provided with a plurality of slots arranged in a circumferential direction and extending in an axial direction, a first slot inner portion and a second slot inner portion of the first hairpin coil are located in the slots.
